# FASCICULE DE BREVET EUROPEEN

(11) **EP 2 243 703 B1**
(45) Date de publication et mention de la délivrance du brevet: **12.03.2014**
(21) Numéro de dépôt: 10159889.4
(22) Date de dépôt: 14.04.2010
(51) Int. Cl.: B64C 25/40

(54) **Procédé de déplacement d'un aéronef au sol**
Verfahren zum Bewegen eines Flugzeugs am Boden
Aircraf taxiing method

(30) Priorité: 24.04.2009 FR 0902001
(43) Date de publication de la demande: 27.10.2010
(73) Titulaire: Messier-Bugatti-Dowty, 78140 Velizy Villacoublay (FR)
(72) Inventeur: Charuel, Hervé, 91620, NOZAY (FR); Delloue, David, 92350, LE PLESSIS-ROBINSON (FR)
(74) Mandataire: Parzy, Benjamin Alain

(56) Documents cités:
- US-A- 3 711 043
- US-A- 3 807 664
- US-A1- 2006 065 779

## Description

L'invention est relative à un procédé de déplacement d'un aéronef au sol.

### ARRIERE-PLAN TECHNOLOGIQUE DE L'INVENTION

Il a été proposé de placer des moteurs de déplacement dans les roues des atterrisseurs principaux d'un aéronef pour permettre la manoeuvre et le déplacement de l'aéronef au sol sans requérir à la poussée des réacteurs. A cet effet, les moteurs sont alimentés au moyen d'un générateur électrique entraîné par l'unité de puissance auxiliaire de l'aéronef.

Les roues des atterrisseurs principaux sont en général très chargées, et elles peuvent potentiellement développer un effort d'entraînement important. Cependant, les roues des atterrisseurs principaux reçoivent en général un frein, et il reste très peu de place pour y disposer un moteur d'une puissance intéressante. Diverses dispositions ont été proposées pour pallier à ce manque de place.

Il a été proposé, par exemple dans le document US2006/065779, de placer les moteurs de déplacement dans les roues de l'atterrisseur auxiliaire, qui en général ne comportent pas de frein. Un volume important est donc disponible pour loger des moteurs de puissance appréciable. De plus, le rayon de roulage en général plus faible des pneumatiques des roues de l'atterrisseur auxiliaire favorise le développement d'un effort d'entraînement plus important, à couple équivalent. Cependant, l'atterrisseur auxiliaire est beaucoup moins chargé que les atterrisseurs principaux. Il supporte couramment 10 à 15 % de la masse de l'aéronef, pourcentage qui peut descendre, dans certaines situations de centrage arrière, à seulement 5%. L'effort d'entraînement développable par les roues de l'atterrisseur auxiliaire peut dès lors se révéler insuffisant pour déplacer l'aéronef, surtout si la piste est en pente, mouillée, voire glacée.

### OBJET DE L'INVENTION

L'invention a pour objet de proposer un agencement des moteurs de déplacement ainsi qu'un procédé de gestion de ces moteurs permettant un déplacement de l'aéronef.

### BREVE DESCRIPTION DE L'INVENTION

En vue de la réalisation de ce but, on propose un procédé de déplacement d'un aéronef équipé au moins d'un atterrisseur auxiliaire à l'avant de l'aéronef et d'atterrisseurs principaux, les atterrisseurs portant des roues, le procédé comportant les étapes de :
- équiper au moins l'une des roues portées par l'atterrisseur auxiliaire d'un organe moteur de déplacement principal et équiper au moins l'une des roues portées par les atterrisseurs principaux d'un organe moteur de déplacement d'appoint ;
- en réponse à un ordre de déplacement, solliciter l'organe moteur de déplacement principal pour déplacer l'aéronef, et au moins dans une situation où l'effort d'entraînement de l'aéronef développé à l'aide de l'organe moteur de déplacement principal s'avère insuffisant pour déplacer l'aéronef, solliciter l'organe moteur de déplacement d'appoint en complément de l'organe moteur de déplacement principal.

Ainsi, on profite du volume important à l'intérieur des roues de l'atterrisseur auxiliaire pour y loger un organe moteur de déplacement principal, qui est en général suffisant pour faire déplacer l'aéronef, sauf peut-être lors du démarrage de l'aéronef, ou lors d'un déplacement de l'aéronef sur une piste en pente ou à bas coefficient de frottement. Dans ce cas, on utilise pendant le temps nécessaire l'organe moteur de déplacement d'appoint logé sur l'une des roues portées par les atterrisseurs principaux, que l'on cesse d'utiliser dès qu'il n'est plus nécessaire au déplacement de l'aéronef. Le cas échéant, il conviendra de continuer à alimenter l'organe moteur de déplacement d'appoint pour éviter qu'il ne s'oppose à l'avancement de l'aéronef.

L'organe moteur de déplacement d'appoint est normalement d'une puissance limitée, de sorte qu'il est plus facilement logeable dans une roue d'atterrisseur principal.

Selon une disposition préférée, on équipe toutes les roues de l'atterrisseur auxiliaire d'un organe moteur de déplacement principal. On profite ainsi à plein du volume total disponible pour y loger la puissance nécessaire à la plupart des manoeuvres au sol de l'aéronef.

Selon une disposition particulière, on équipe toutes les roues des atterrisseurs principaux d'un organe moteur de déplacement d'appoint. Ainsi, toutes les roues des atterrisseurs principaux sont identiques, ce qui évite de gérer plusieurs références. En outre, la puissance d'appoint est ainsi répartie, de sorte que les organes moteurs d'appoint sont en pratique moins encombrants et sont donc plus facilement logeables dans les roues des atterrisseurs principaux.

Les termes principaux et appoint qualifiant les organes moteurs de déplacement sont destinés à refléter la priorité d'utilisation de ces moteurs, et ne préjugent en rien des dimensions ou de la puissance relatives de ces organes moteurs.

Selon un aspect avantageux, on adapte constamment la puissance délivrée aux organes moteurs de déplacement de sorte que le déplacement de l'aéronef soit conforme à l'ordre de déplacement, en annulant le couple délivré par l'organe au moteur de déplacement d'appoint dès que celui-ci n'est plus utile au déplacement de l'aéronef. Ainsi, une fois que l'aéronef a commencé à se déplacer, la résistance au déplacement chute de façon significative, et il est souvent inutile de continuer à alimenter le ou les organes moteurs de déplacement d'appoint, sauf à l'alimenter de façon suffisante pour qu'il ne génère pas de couple résistant s'opposant au déplacement de l'aéronef.

### BREVE DESCRIPTION DES FIGURES

L'invention sera mieux comprise à la lumière de la description qui suit de mises en oeuvre de l'invention, en référence aux figures des dessins annexés parmi lesquelles :
- la figure 1 est une vue en schématique d'un aéronef équipé de moteurs de déplacement principaux et d'appoint selon un premier mode de mise en oeuvre de l'invention ;
- la figure 2 est une vue en coupe partielle d'une roue d'atterrisseur auxiliaire équipée d'un moteur de déplacement principal ;
- la figure 3 est une vue en coupe partielle d'une roue d'atterrisseur principal équipée d'un moteur de déplacement d'appoint ;

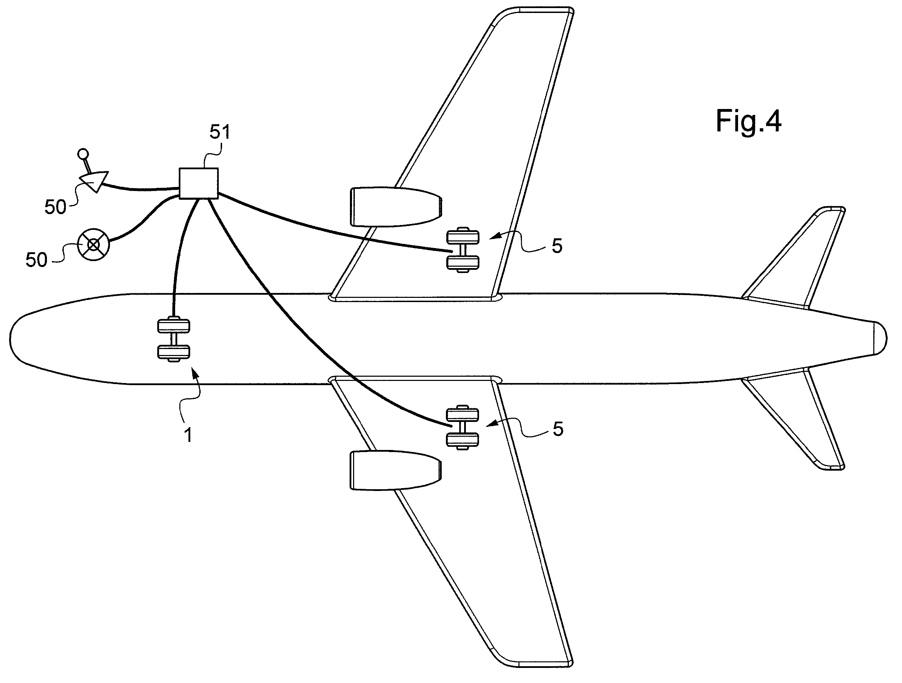

- la figure 4 est une vue schématique d'un aéronef équipé de moteurs de déplacement principaux et d'appoint selon un deuxième mode de mise en oeuvre de l'invention.

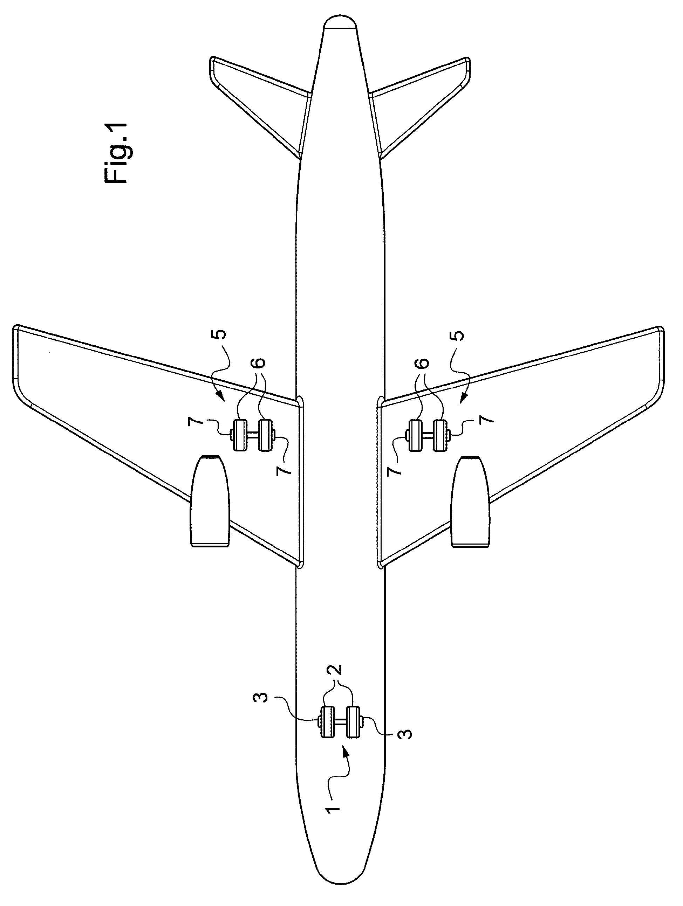

En référence à la figure 1, l'aéronef comporte un atterrisseur auxiliaire 1 qui porte deux roues 2 qui sont chacune équipées d'un moteur de déplacement principal 3.

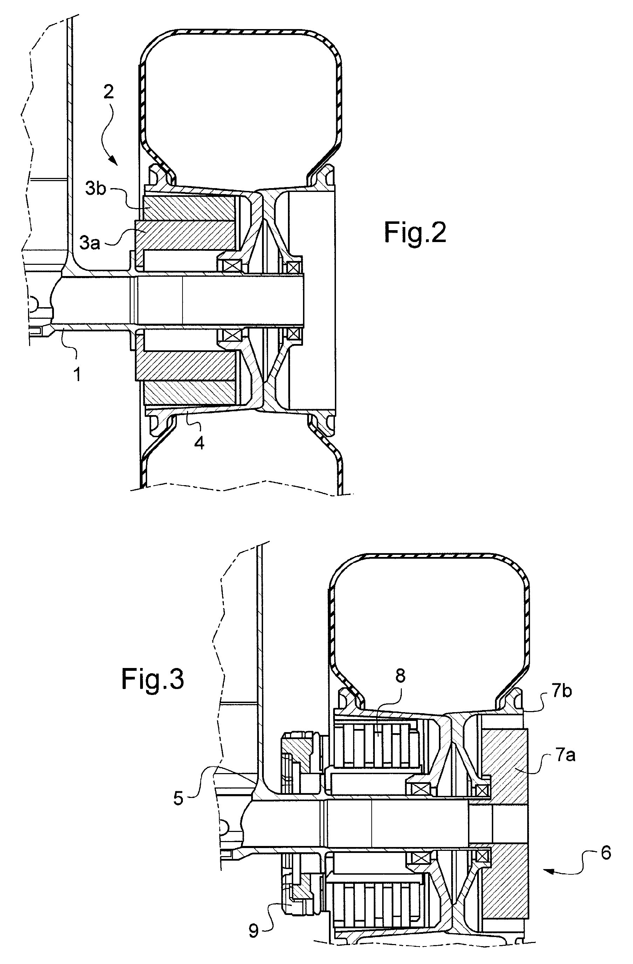

Sur la figure 2, on aperçoit l'une des roues 2 de l'atterrisseur auxiliaire 1 dont la jante 4 est creuse et définit un volume interne pouvant recevoir un moteur de déplacement principal 3 d'une taille intéressante. Ici, le moteur de déplacement principal comporte un stator bobiné 3a solidaire de l'atterrisseur, en relation électromagnétique avec un rotor à aimant permanents 3b solidaire de la jante de la roue 2. Ici, le moteur de déplacement comporte un unique moteur électrique, du type moteur couple, de préférence sans réducteur.

L'aéronef comporte également deux atterrisseurs principaux 5 qui portent chacun deux roues 6, chacune équipées d'un moteur de déplacement d'appoint 7.

Sur la figure 3, on aperçoit l'une des roues 6 de l'atterrisseur principal 5 dont la jante est creuse. Ici le volume interne est essentiellement occupé par un frein dont on aperçoit la pile de disques 8 et la couronne 9 portant les pistons de frein. Ici, le moteur de déplacement d'appoint 7 se présente sous la forme d'un moteur disque comportant un stator bobiné 7a solidaire de l'extrémité de l'essieu en relation électromagnétique avec un disque rotor à aimants permanents 7b solidaire de la roue 6. Le moteur de déplacement auxiliaire est disposé vers l'extérieur de la roue, à l'opposé du frein.

Bien sûr, l'invention n'est pas limitée à ce type de moteur, et on pourra utiliser d'autres types de moteurs, qu'ils soient électriques, hydrauliques ou de toute autre technologie.

Le procédé de l'invention est le suivant. L'aéronef étant à l'arrêt, le pilote sollicite la commande de déplacement de l'aéronef. Cette commande peut être une commande distincte de la manette des gaz, par exemple une manette de roulage 50 générant un ordre de déplacement, par exemple une vitesse de déplacement de l'aéronef au sol. Cependant, cette commande pourrait, pour ne pas changer les habitudes des pilotes, être constituée par la manette des gaz. Un calculateur de déplacement 51 de l'aéronef vérifie alors si les réacteurs sont en fonctionnement, et si ce n'est pas le cas, le calculateur comprend alors que le pilote qui manipule la manette des gaz désire déplacer l'aéronef en utilisant les moteurs de déplacement.

En réponse à l'ordre de déplacement, le calculateur de déplacement 51 commence par alimenter les moteurs de déplacement principaux 3 disposés dans les roues de l'atterrisseur auxiliaire 1. Dans beaucoup de circonstances, notamment lorsque l'aéronef est lourd et est centré avant, l'effort d'entraînement généré par les moteurs de déplacement principaux est suffisant pour faire démarrer l'aéronef.

Cependant il peut arriver que l'effort d'entraînement développé par les moteurs de déplacement principaux ne soit pas suffisant pour faire démarrer l'aéronef. En effet, il est connu que la résistance au déplacement est plus grande lorsque l'aéronef est à l'arrêt que lorsqu'il est déjà en mouvement. Si l'aéronef est centré arrière, ou stationné sur une zone aéroportuaire glissante ou en pente, le démarrage de l'aéronef à l'aide des seuls moteurs de déplacement principaux risque d'être difficile, voire impossible.

Dans ces conditions, le calculateur de déplacement 51 commande l'alimentation en parallèle des moteurs de déplacement d'appoint 7 disposés dans les roues des atterrisseurs principaux 5, en leur fournissant une puissance suffisante pour faire démarrer l'aéronef.

Dès le démarrage, la résistance au roulement chute. Le calculateur de déplacement 51 est programmé pour adapter la puissance consommée par les moteurs de déplacement au strict nécessaire pour répondre à l'ordre de déplacement, afin d'éviter une surconsommation inutile. En effet, les moteurs de déplacement sont utilisés alors que les réacteurs sont à l'arrêt, de sorte que l'énergie nécessaire à la manoeuvre de l'aéronef provient soit des batteries de l'aéronef, soit du générateur électrique entraîné par l'unité de puissance auxiliaire de l'aéronef. Il convient dès lors de ne pas solliciter inutilement ces deux sources de puissance.

De préférence, le calculateur de déplacement 51 est programmé pour d'abord réduire la puissance fournie aux moteurs de déplacement d'appoint 7. Selon les circonstances, il se peut que l'effort d'entraînement généré par les seuls moteurs de déplacement principaux 3 soit suffisant pour déplacer l'aéronef à la vitesse requise, de sorte qu'il convient non plus seulement de réduire la puissance fournie aux moteurs de déplacement d'appoint 7, mais de la réduire à une valeur pour laquelle la résistance de la roue au déplacement est faible ou nulle. A cet égard, on réduira de préférence la puissance de façon que le couple généré par la roue associée soit sensiblement nul. Le calculateur de déplacement 51 ajuste alors la puissance fournie aux seuls moteurs de déplacement principaux 3.

Les dispositions de l'invention présentent de nombreux avantages :
- les moteurs de déplacement principaux sont de préférence dimensionnés pour couvrir les conditions de roulage courantes et sont donc utilisés pour tous les déplacements. Les moteurs de déplacement d'appoint sont seulement utilisés pour le démarrage de l'aéronef, ou pour aider les moteurs de déplacement principaux dans certaines phases délicates (par exemple piste glissante et en pente) ;
- les moteurs de déplacement d'appoint sont ici au nombre de quatre, ce qui permet de répartir sur chacune des roues l'effort d'entraînement complémentaire à l'effort d'entraînement généré par les roues de l'atterrisseur auxiliaire. Ainsi, chaque moteur de déplacement d'appoint a une puissance limitée, ce qui lui confère des dimensions raisonnables lui permettant d'être logé au moins partiellement dans une roue d'atterrisseur principal dont le volume interne est largement rempli par le frein associé ;
- le dispositif de déplacement de l'invention présente une grande disponibilité, puisqu'il est possible de laisser décoller l'aéronef avec l'un des moteurs de déplacement d'appoint en panne. Dans le cas d'espèce, la perte d'un moteur de déplacement d'appoint représente un déficit de 25% de la capacité motrice d'appoint, qui peut être partiellement compensé en augmentant le couple des autres moteurs de déplacement d'appoint. Au pire, il est même possible de laisser décoller l'aéronef avec le dispositif inactivé, puisque l'aéronef peut toujours être déplacé au moyen des réacteurs ;
- on pourra utiliser les moteurs de déplacement pour récupérer une partie de l'énergie de freinage ;
- on pourra également utiliser les moteurs de déplacement d'appoint pour fournir une aide momentanée à l'accélération si une accélération importante a été commandée par le pilote ;
- les moteurs de déplacement d'appoint peuvent en outre être commandés de façon différentielle, de sorte qu'ils peuvent faciliter les virages de l'aéronef, voire permettre un demi-tour sur place. A cet effet, le calculateur de déplacement 51 reçoit des signaux d'un volant d'orientation 52 manoeuvré par le pilote pour faire virer l'aéronef. Le calculateur de déplacement 51 est alors avantageusement relié à la commande d'orientation de l'atterrisseur auxiliaire 1 pour commander la commande d'orientation, et, si besoin, notamment lors d'un virage serré, commander les moteurs de déplacement d'appoint 7 de façon différentielle pour aider au virage. Le calculateur de déplacement 51 pourra également commander les deux moteurs de déplacement principaux de façon différentielle pour aider la commande de direction, voire la remplacer si celle-ci est défaillante ;
- on profitera avantageusement de la présence des moteurs de déplacement pour faire effectuer à l'aéronef

une marche arrière sans l'aide d'un tracteur, mais également pour faire tourner les roues juste avant l'atterrissage de sorte que la vitesse périphérique tangentielle de chacune des roues soit sensiblement égale à la vitesse de l'aéronef.

De préférence, le calculateur de déplacement 51 met en oeuvre une protection d'anti-glissement pour éviter que l'une des roues entraînée par l'un des moteurs de déplacement patine sous l'action du moteur.

Bien que dans l'exemple illustré, l'aéronef comporte deux atterrisseurs principaux portant chacun deux roues freinées, l'invention se généralise immédiatement à tout aéronef, quelque soit le nombre d'atterrisseurs principaux et le nombre de roues freinées portées.

Il est généralement avantageux d'équiper toutes les roues des atterrisseurs principaux de moteurs de déplacement d'appoint, afin d'homogénéiser le train de roues. Cependant, dans certaines circonstances, il est possible de n'équiper que certaines des roues des atterrisseurs principaux de moteurs de déplacement d'appoint. Par exemple, sur des aéronefs comme le B747 qui disposent de deux atterrisseurs principaux de voilure et de deux atterrisseurs principaux de fuselage, il pourra être intéressant d'équiper de moteurs de déplacement d'appoint uniquement les roues des atterrisseurs de fuselage, si huit roues équipées de moteurs de déplacement d'appoint sont suffisantes. Ou, si l'on désire pouvoir profiter d'un effet différentiel des moteurs de déplacement d'appoint lors des virages, on pourra choisir d'équiper uniquement les roues des atterrisseurs de voilure.

Le deuxième mode de mise en oeuvre de l'invention qui va maintenant être détaillé est particulièrement adapté à des aéronefs portant un atterrisseur principal central dont les roues ne sont pas freinées, comme par exemple l'A340.

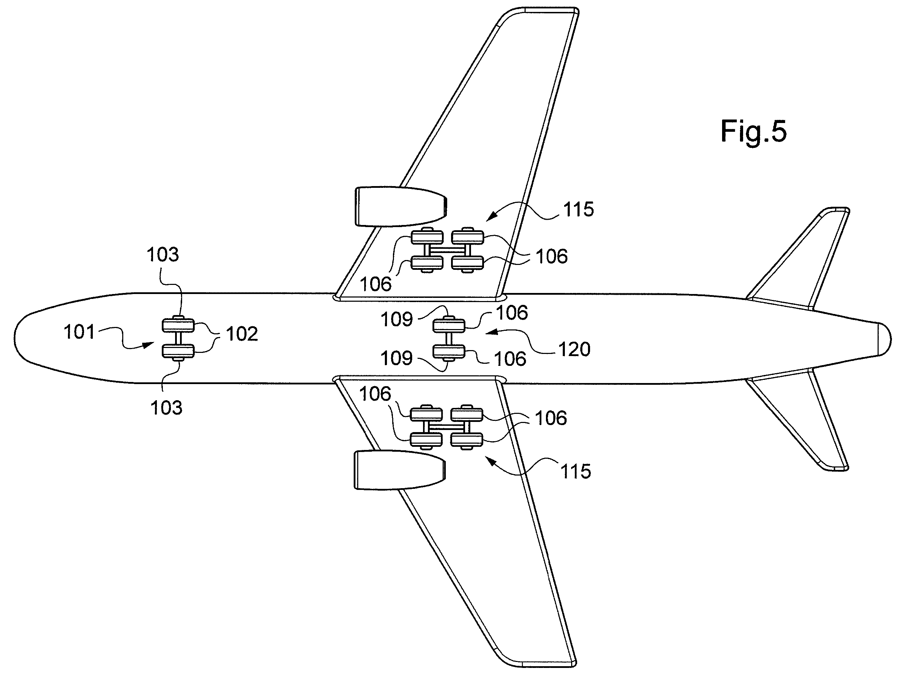

Comme cela est visible à la figure 5, l'aéronef comporte un atterrisseur auxiliaire 101 à l'avant du fuselage, deux atterrisseurs principaux de voilure 115 à quatre roues freinées et un atterrisseur principal central 120 portant deux roues non freinées. L'aéronef est selon l'invention équipé de moteurs de déplacement principaux 103 dans les roues 102 de l'atterrisseur auxiliaire 101, et de moteur de déplacement d'appoint 109, ici logés dans les roues non freinées 108 portées par l'atterrisseur principal central 120. Ainsi, on profite de l'espace libre dans la jante pour y loger un moteur de déplacement d'appoint de dimension plus importante que celle que l'on peut envisager pour un moteur de déplacement d'appoint logé dans une roue freinée. Le moteur de déplacement d'appoint peut alors prendre la même forme que celui qui équipe les roues de l'atterrisseur auxiliaire.

Ainsi, pour des versions alourdies d'aéronefs existants pour lesquels il est envisagé de disposer d'un atterrisseur principal central supplémentaire, on pourra exploiter les roues de cet atterrisseur supplémentaire pour les équiper de moteurs de déplacement d'appoint, surtout si les roues correspondantes ne sont pas freinées.

De la même façon, sur un aéronef comme l'A380 sur lequel il a été envisagé que les atterrisseurs principaux de fuselage peuvent comporter un essieu arrière orientable dont les deux roues ne sont pas freinées, on pourra avantageusement profiter de l'espace libre dans les roues non freinées pour y placer un moteur de déplacement d'appoint.

On a indiqué qu'au démarrage, on sollicitait les moteurs de déplacement d'appoint uniquement si l'effort d'entraînement développé par les roues de l'atterrisseur auxiliaire était insuffisant pour déplacer l'aéronef. On pourra au contraire décider, dans un cadre qui ne fait pas partie de l'invention, d'alimenter systématiquement les moteurs de déplacement d'appoint en même temps que les moteurs de déplacement principaux, même si les moteurs de déplacement principaux auraient suffi pour faire déplacer l'aéronef.

L'invention n'est pas limitée à ce qui vient d'être décrit. Bien que dans la description l'on ait ici indiqué que l'on disposait un moteur de déplacement par roue équipée, on parlera plus généralement d'organe de déplacement, pouvant, le cas échéant, comporter plusieurs moteurs.

Bien que l'organe moteur de déplacement principal se loge naturellement à l'intérieur de la jante de la roue correspondante (de même pour des moteurs de déplacement d'appoint équipant des roues non freinées d'atterrisseurs principaux), on pourra disposer les organes moteurs de déplacement d'appoint ailleurs que dans la jante de la roue, si celle-ci est trop encombrée. Diverses solutions ont été proposées pour entraîner les roues des atterrisseurs principaux, comme un entraînement par galet.

De même, l'organe moteur de déplacement d'appoint pourra être logé ailleurs que dans la jante de la roue associée.

## Revendications

1. Procédé de déplacement d'un aéronef comportant au moins un atterrisseur auxiliaire à l'avant de l'aéronef et des atterrisseurs principaux, chacun des atterrisseurs portant des roues, comportant les étapes de :
- équiper au moins l'une des roues (2 ; 102) portées par l'atterrisseur auxiliaire (1 ; 101) d'un organe moteur de déplacement principal (3 ; 103), et équiper au moins l'une des roues portées par les atterrisseurs principaux (5 ; 105) d'un organe moteur de déplacement d'appoint (7 ; 109) ;
- en réponse à un ordre de déplacement, solliciter l'organe moteur de déplacement principal pour déplacer l'aéronef, et uniquement si l'effort d'entraînement de l'aéronef développé à l'aide de l'organe moteur de déplacement principal s'avère insuffisant pour déplacer l'aéronef, solliciter l'organe moteur de déplacement d'appoint en complément de l'organe moteur de déplacement principal.

2. Procédé selon la revendication 1, dans lequel on adapte constamment la puissance délivrée aux organes moteurs de déplacement de sorte que le déplacement de l'aéronef soit conforme à l'ordre de déplacement, en annulant le couple délivré par l'organe moteur de déplacement d'appoint dès que celui-ci n'est plus utile au déplacement de l'aéronef.

3. Procédé selon la revendication 1, dans lequel les roues de l'atterrisseur auxiliaire sont toutes équipées d'un organe moteur de déplacement principal (3 ; 103).

4. Procédé selon la revendication 1, dans lequel les roues (5) des atterrisseurs principaux sont toutes équipées d'un organe moteur de déplacement d'appoint (7).

5. Procédé selon la revendication 1, dans lequel au moins un atterrisseur principal porte des roues non freinées, seules ces roues étant équipées d'organes moteurs de déplacement d'appoint.

6. Procédé selon la revendication 1, dans lequel on commande les organes moteurs de déplacement de façon différentielle pour aider l'aéronef à virer.

## Patentansprüche

1. Verfahren zum Bewegen eines Flugzeugs, das mindestens ein Hilfsfahrwerk am Bug des Flugzeugs und Hauptfahrwerke umfasst, wobei jedes der Fahrwerke Räder trägt, umfassend die Schritte:
- Ausrüsten mindestens eines der von dem Hilfsfahrwerk (1; 101) getragenen Räder (2; 102) mit einem Hauptantriebsorgan (3; 103) für die Bewegung und Ausrüsten mindestens eines der von den Hauptfahrwerken (5; 105) getragenen Räder mit einem Zusatzantriebsorgan (7; 109) für die Bewegung;
- in Antwort auf eine Bewegungsanweisung, Beanspruchen des Hauptantriebsorgans, um das Flugzeug zu bewegen, und nur wenn sich die Antriebskraft des Flugzeugs, die mit Hilfe des Hauptantriebsorgans entwickelt wurde, als unzureichend zum Bewegen des Flugzeugs erweist, Beanspruchen des Zusatzantriebsorgans in Ergänzung zum Hauptantriebsorgan.

2. Verfahren nach Anspruch 1, wobei die den Antriebsorganen zugeführte Leistung ständig so angepasst wird, dass die Bewegung des Flugzeugs der Bewegungsanweisung entspricht, indem das von dem Zusatzantriebsorgan gelieferte Drehmoment außer Kraft gesetzt wird, sobald dieses zum Bewegen des Flugzeugs nicht mehr erforderlich ist,

3. Verfahren nach Anspruch 1, wobei die Räder des Hilfsfahrwerks alle mit einem Hauptantriebsorgan (3; 103) ausgerüstet sind.

4. Verfahren nach Anspruch 1, wobei die Räder (5) der Hauptfahrwerke alle mit einem Zusatzantriebsorgan (7) ausgerüstet sind.

5. Verfahren nach Anspruch 1, wobei mindestens ein Hauptfahrwerk ungebremste Räder trägt, wobei nur diese Räder mit Zusatzantriebsorganen ausgerüstet sind.

6. Verfahren nach Anspruch 1, wobei die Antriebsorgane differentiell gesteuert werden, um das Flugzeug bei der Kurvenfahrt zu unterstützten.

## Claims

1. A method of taxiing an aircraft having at least one auxiliary undercarriage at the front of the aircraft and main undercarriages, each undercarriage having wheels, the method comprising the steps of:
• fitting at least one of the wheels (2; 102) carried by the auxiliary undercarriage (1; 101) with a main taxiing motor member (3; 103), and fitting at least one of the wheels carried by the main undercarriages (5; 105) with an auxiliary taxiing motor member (7; 109); and
• in response to a taxiing order, powering the main taxiing motor member to cause the aircraft to taxi, and only if the driving force developed by the main taxiing motor member on the aircraft is not sufficient to move the aircraft, powering the auxiliary taxiing motor member in addition to the main taxiing motor member.

2. A method according to claim 1, wherein the power delivered to the taxiing motor members is continuously adapted so that the taxiing of the aircraft complies with the taxiing order, with the torque delivered by the auxiliary taxiing motor member being reduced to zero as soon as it is no longer useful for causing the aircraft to taxi.

3. A method according to claim 1, wherein each of the wheels of the auxiliary undercarriage is fitted with a respective main taxiing motor member (3; 103).

4. A method according to claim 1, wherein each of the wheels (5) of the main undercarriages is fitted with a respective auxiliary taxiing motor member (7).

5. A method according to claim 1, wherein at least one main undercarriage carries wheels that are not braked, with only these wheels being fitted with auxiliary taxiing motor members.

6. A method according to claim 1, wherein the taxiing motor members are controlled in differential manner in order to assist the aircraft in turning.
